(19) Europäisches Patentamt
European Patent Office
Office européen des brevets

(11) Publication number: **0 488 306 B1**

(12) **EUROPEAN PATENT SPECIFICATION**

(45) Date of publication of patent specification: **08.02.95**

(51) Int. Cl.[6]: **C09D 9/04**, D21C 5/02

(21) Application number: **91120422.0**

(22) Date of filing: **28.11.91**

(54) **Deinking agent for the reclamation of waste paper.**

(30) Priority: **29.11.90 JP 337708/90**

(43) Date of publication of application:
**03.06.92 Bulletin 92/23**

(45) Publication of the grant of the patent:
**08.02.95 Bulletin 95/06**

(84) Designated Contracting States:
**DE FR GB IT SE**

(56) References cited:
**EP-A- 0 434 084**
**DE-A- 3 401 444**

**PATENT ABSTRACTS OF JAPAN, vol. 15, no. 153 (C-0826), 24 April 1991; & JP-A-03 035 067**

(73) Proprietor: **Mitsubishi Oil Company, Limited**
**no. 2-4, Toranomon 1-chome**
**Minato-ku**
**Tokyo (JP)**

(72) Inventor: **Takahashi, Yoshio**
**1-33-4, Sakuragaoka**
**Yokosuka-shi,**
**Kanagawa (JP)**
Inventor: **Taketomi, Yasuaki**
**1-403-10-601, Kosugi-cho,**
**Nakahara-ku**
**Kawasaki-shi,**
**Kanagawa (JP)**
Inventor: **Nakamura, Takashi**
**10, Kuritaya,**
**Kanagawa-ku**
**Yokohama-shi,**
**Kanagawa (JP)**
Inventor: **Aizono, Hirofumi**
**1-17-1-316, Kodai,**
**Miyamae-ku**
**Kawasaki-shi,**
**Kanagawa (JP)**

(74) Representative: **Hansen, Bernd, Dr.**
**Dipl.-Chem. et al**
**Hoffmann, Eitle & Partner**
**Patent- und Rechtsanwälte,**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

FIELD OF THE INVENTION

This invention relates to a deinking agent to be used for the reclamation of waste paper such as in used newspapers, OA (office automation) papers, magazines and books. More particularly, it relates to a deinking agent excellent in its ability to collect, aggregate and liberate ink. Therefore, a deinked pulp having high whiteness and contaminated with little unliberated ink can be obtained by deinking, for example, newspapers, OA papers, magazines and books with the deinking agent of the present invention by a flotation method, a washing method or a flotation/washing combination method.

BACKGROUND OF THE INVENTION

It has become the practice to reclaim printed waste paper including newspapers and magazines. Recently, uses for deinked pulp have been enlarged and advanced. On the other hand, the effective utilization of waste paper has become more and more important in order to reduce paper manufacturing costs.

Further, the reclamation of waste paper is highly valuable from the viewpoints of saving energy, refuse collection in urban communities and conservation of forest resources.

On the other hand, recent improvements in printing techniques, printing systems and ingredients of printing inks have made it difficult to deink waste paper. In order to facilitate deinking, therefore, attempts have been made to improve deinking devices.

Deinking agents may be roughly classified into two types, namely, dispersion-type deinking agents whereby liberated ink is removed from the system in a finely dispersed state (mainly involving noninic surfactants), and aggregation-type deinking agents whereby liberated ink is aggregated to a certain degree and then removed from the system.

Known chemicals which have been employed as such deinking agents for reclaiming waste paper include anionic surfactants (for example, alkylbenzene sulfonates, alkyl sulfates, α-olefin sulfonates, dialkyl sulfosuccinates, higher fatty acid salts), nonionic surfactants (for example, higher alcohol ethylene oxide adducts, alkyl phenol ethylene oxide adducts, fatty acid ethylene oxide adducts, fatty acid amide ethylene oxide adducts, polypropylene glycol ethylene oxide adducts, fat ethylene oxide adducts, higher alcohol ethylene oxide propylene oxide adducts) and ampholytic surfactants (for example, amine oxides, alkyl betaines).

However, these chemicals and blends thereof do not always show a sufficiently high deinking efficiency in the flotation stage. Thus, they do not always give a reclaimed paper having high whiteness which is contaminated with less unliberated ink.

When a fatty acid which is in the form of a solid at room temperature is used, it shows an excellent ability to aggregate ink but a number of unliberated ink spots are frequently formed in this case. Further, such requires a high cost for supplying energy for melting.

When a fatty acid salt is used as such or in the form of an aqueous solution, the obtained reclaimed pulp shows low whiteness. When a fatty acid which is in the form of a liquid at room temperature is used, it suppresses foaming of a surfactant employed as a foaming agent and thus the liberated ink cannot be fully removed from the system. As a result, the whiteness of the pulp thus reclaimed cannot be increased.

Although common nonionic surfactants are excellent in their ability to disperse ink, detergency and foaming properties, they result in only poor aggregation of ink. Therefore, the reclaimed pulp obtained will not always show high whiteness.

As described above, there has been found no chemicals which are excellent in all characteristics including the liberation or ink from waste papers and aggregation of the liberated ink in the pulping stage as well as foaming properties and the ability to collect ink in the flotation stage. Thus, the general practice is to combine or blend two or more specific chemicals. Although a deinking method using a blend thus obtained exerts effects at a certain level, it is not always satisfactory.

In recent years, the utilization of deinked pulp has been enlarged and the mixing ratio thereof with fresh pulp has been increased. As a result, contamination of the deinked pulp with unliberated ink spots, which are not removed from waste paper, has become a serious problem. In addition, waste paper which can hardly be deinked (for example, OA paper with the use of toners) has recently been more and more employed. Under these circumstances, it has been urgently required to develop a deinking agent having an improved ability to liberate ink.

SUMMARY OF THE INVENTION

Therefore, the present inventors conducted extensive research in order to find a deinking agent free from the above-mentioned disadvantages, thus reaching the present invention.

Accordingly, the deinking agents or the reclamation of waste paper of the present invention comprise:

(1) a compound represented by the following general formula (I);
(2) a compound represented by the following general formula (II);
(3) a compound represented by the following general formula (III);
(4) a compound represented by the following general formula (IV); or
(5) a compound represented by the following general formula (V).

General formula (I):

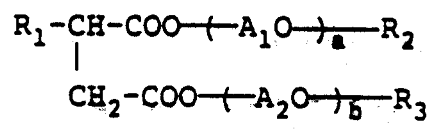

wherein $R_1$ represents an alkyl or alkenyl group having 5 to 30 carbon atoms;

$R_2$ and $R_3$ may be either the same or different and each represents an alkyl or alkenyl group having 1 to 30 carbon atoms, an alkylphenyl group having an alkyl group having 3 to 20 carbon atoms or an aralkyphenyl group having 1 to 5 aralkyl groups;

$A_1O$ and $A_2O$ each represents a polyoxyalkylene group formed by polymerizing oxyalkylene groups having 2 to 4 carbon atoms which may yield either a block polymer chain or a random polymer chain when two or more kinds of the alkylene oxide are present; and

a and b may be either the same or different and each represents a number of 1 or more so as to give a number average molecular weight to the corresponding polyoxyalkylene group of 10,000 or less.

General formula (II):

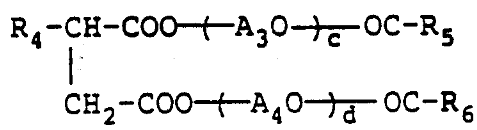

wherein $R_4$ represents an alkyl or alkenyl group having 5 to 30 carbon atoms;

$R_5$ and $R_6$ may be either the same or different and each represents an alkyl or alkenyl group having 5 to 21 carbon atoms;

$A_3O$ and $A_4O$ each represents a polyoxyalkylene group formed by polymerizing oxyalkylene groups having 2 to 4 carbon atoms which may yield either a block polymer chain or a random polymer chain when two or more kinds of the alkylene oxide are present; and

c and d may be either the same or different and each represents a number of 1 or more so as to give a number average molecular weight to the corresponding polyoxyalkylene group of 10,000 or less.

General formula (III):

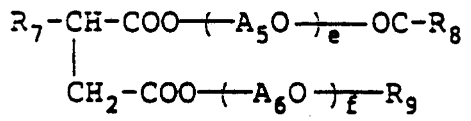

; or

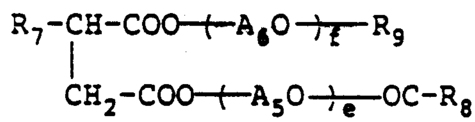

wherein $R_7$ represents an alkyl or alkenyl group having 5 to 30 carbon atoms;

$R_8$ represents an alkyl or alkenyl group having 5 to 21 carbon atoms;

$R_9$ represents a hydrogen atom or an alkyl or alkenyl group having 1 to 30 carbon atoms, an alkylphenyl group having an alkyl group having 3 to 20 carbon atoms or an aralkylphenyl group having 1 to 5 aralkyl groups;

$A_5O$ and $A_5O$ each represents a polyoxyalkylene group formed by polymerizing oxyalkylene groups having 2 to 4 carbon atoms which may yield either a block polymer chain or a random polymer chain when two or more kinds of the alkylene oxide are present; and

e and f may be either the same or different and each represents a number of 1 or more so as to give a number average molecular weight to the corresponding polyxoyalkylene group of 10,000 or less.

General formula (IV):

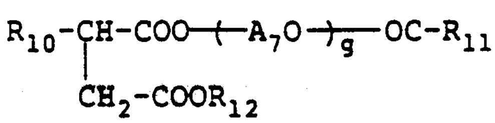

; or

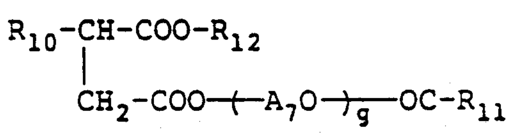

wherein $R_{10}$ represents an alkyl or alkenyl group having 5 to 30 carbon atoms;

$R_{11}$ represents an alkyl or alkenyl group having 5 to 21 carbon atoms;

$R_{12}$ represents a hydrogen atom, an alkyl group having 1 to 8 carbon atoms or an alkenyl group having 2 to 8 carbon atoms;

$A_7O$ represents a polyoxyalkylene group formed by polymerizing oxyalkylene groups having 2 to 4 carbon atoms which may yield either a block polymer chain or a random polymer chain when two or more kinds of the alkylene oxide are present; and

g is a number of 1 or more so as to give a number average molecular weight to the polyoxyalkylene group of 10,000 or less.

General formula (V):

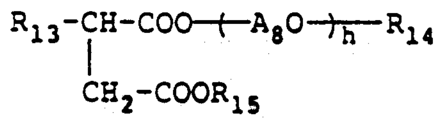

; or

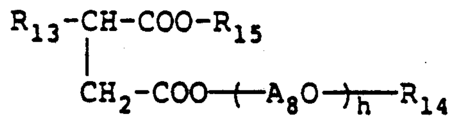

wherein $R_{13}$ represents an alkyl or alkenyl group having 5 to 30 carbon atoms;

$R_{14}$ represents an alkyl or alkenyl group having 1 to 30 carbon atoms, an alkylphenyl group having an alkyl group having 3 to 20 carbon atoms or an aralkylphenyl group having 1 to 5 aralkyl groups;

$R_{15}$ represents a hydrogen atom, an alkyl group having 1 to 8 carbon atoms or an alkenyl group having 2 to 8 carbon atoms;

$A_8O$ represents a polyoxyalkylene group formed by polymerizing oxyalkylene groups having 2 to 4 carbon atoms which may yield ether a block polymer chain or a random polymer chain when two or more kinds of the alkylene oxide are present; and

h is a number of 1 or more so as to give a number average molecular weight to the polyoxyalkylene group of 10,000 or less.

Each of the compounds represented by the general formulae (I), (II), (III), (IV) and (V) used in the present invention, which is obtained by, for example, further esterifying an ethylene oxide, propylene oxide or butylene oxide adduct of a dibasic acid, is characterized by being excellent in its ability to wash and disperse ink and its foaming properties. Further, it is a dibasic acid-series compound and thus is much superior to common nonionic surfactants in its ability to aggregate ink. When employed alone, therefore, this compound shows good performance as a deinking agent. In addition, it is in the form of a liquid and thus can be easily handled, different from, for example, fatty acids.

## DETAILED DESCRIPTION OF THE INVENTION

The present invention will now be described in detail.

The compound represented by general formula (I) used in the present invention may be prepared by, for example, esterifying an alkylsuccinic acid or an alkenylsuccinic acid with a polyoxyalkylene alkyl ether or a polyoxyalkylene alkenyl ether. Any method may be employed therefor so long as a compound as specified herein can thereby be obtained.

The alkylsuccinic acid or alkenylsuccinic acid used in this case may have alkyl or alkenyl groups of the same carbon atom number. Alternately, a mixture of those differing in carbon atom number may be employed. Further, either straight-chain compounds or branched ones may be used.

However, it is undesirable that the carbon atom number of $R_1$ is 31 or more, since the deinking performance is deteriorated and the compound is liable to solidify in this case. When the carbon atom number of $R_1$ is 4 or less, on the other hand, the hydrophobic group becomes small, which sometimes deteriorates the deinking performance.

When each of $R_2$ and $R_3$ represents an alkyl or alkenyl group having 31 or more carbon atoms or an alkylphenyl group having an alkyl group having 21 or more carbon atoms, the deinking performance is deteriorated. When the number average molecular weight of each of the polyoxyalkylene groups $A_1O$ and $A_2O$ exceeds 10,000, the deinking performance is also deteriorated.

The compound represented by general formula (II) may be obtained by, for example, adding an alkylene oxide (for example, ethylene oxide) to an alkylsuccinic acid or an alkenylsuccinic acid (more conveniently, a polyalkylene glycol to which an alkylene oxide has been polymerized may be employed) and further reacting the obtained adduct with a fatty acid. Any method may be employed therefor so long as a compound as specified herein can thereby be obtained. For example, 1 mol of an alkylsuccinic acid or an alkenylsuccinic acid is converted into a diester with 2 mols of polyethylene glycol or a polyethylene

glycol/polypropylene glycol copolymer (either a random copolymer or a block one) which has been obtained by polymerizing ethylene oxide and propylene oxide and then reacting the obtained diester with 2 mols of a fatty acid.

Examples of the fatty acid used herein include straight-chain fatty acids such as lauric acid and stearic acid, unsaturated fatty acids such as oleic acid and branched fatty acids such as isostearic acid. In this case, either a saturated fatty acid or an unsaturated one and either a straight-chain or a branched one may be used.

When the carbon atom number(s) of $R_5$ and/or $R_6$ are 4 or less or 22 or more, the deinking performance is deteriorated.

Similar to the case of the compound of general formula (I), it is undesirable that the carbon atom number of $R_4$ exceeds 30, since the deinking performance is deteriorated and the compound is liable to solidify in this case. When the carbon atom number of $R_4$ is 4 or less, the hydrophobic group becomes small, which sometimes deteriorates the deinking performance.

The compound represented by general formula (III) may be obtained by, for example, esterifying 1 mol of an alkylsuccinic acid or an alkenylsuccinic acid with 1 mol of a polyoxyalkylene alkyl ether, adding an alkylene oxide (for example, ethylene oxide) to the obtained ester (more conveniently, a polyalkylene glycol to which an alkylene oxide has been polymerized may be employed) and further reacting the obtained adduct with a fatty acid. Any method may be employed therefor so long as a compound as specified herein can thereby be obtained. The fatty acid may be selected from among those cited regarding the compounds of general formula (II).

Similar to the cases of the compounds of the general formulae (I) and (II), it is undesirable that the carbon atom number of $R_7$ exceeds 30, since the deinking performance is deteriorated and the compound is liable to solidify in this case. When the carbon atom number of $R_7$ is 4 or less, the hydrophobic group becomes small, which sometimes deteriorates the deinking performance.

When the carbon atom number of $R_9$ is 31 or more or that of $R_8$ is 4 or less or 22 or more, the deinking performance is also deteriorated.

The compound represented by general formula (IV) may be obtained by, for example, monoesterifying an alkylsuccinic acid or an alkenylsuccinic acid with an alcohol, adding an alkylene oxide (for example, ethylene oxide) to the obtained ester (more conveniently, a polyalkylene glycol to which an alkylene oxide has been polymerized may be employed) and further reacting the obtained adduct with a fatty acid. Any method may be employed therefor so long as a compound as specified herein can thereby be obtained. The fatty acid may be selected from among those cited regarding the compounds of general formulae (II) and (III).

Similar to the cases of the compounds of general formulae (I), (II) and (III), it is undesirable that the carbon atom number of $R_{10}$ is 31 or more, since the deinking performance is deteriorated and the compound is liable to solidify in this case. When the carbon atom number of $R_{10}$ is 4 or less, the hydrophobic group becomes small, which sometimes deteriorates the deinking performance. When the carbon atom number of $R_{11}$ is 4 or less or 22 or more or that of $R_{12}$ is 9 or more, the deinking performance is also deteriorated.

The compound represented by general formula (V) may be obtained by monoesterifying with an alcohol similar to the procedure for preparing the compound of the general formula (IV) and then diesterifying with a polyoxyalkylene alkyl ether or a polyoxyalkylene alkenyl ether. Any method may be employed so long as a compound as specified herein can thereby be obtained.

When the carbon atom number of $R_{14}$ is 31 or more or that of $R_{15}$ is 9 or more, the deinking performance is deteriorated.

Similar to the cases of the compounds of the general formulae (I), (II), (III) and (IV), it is undesirable that the carbon atom number of $R_{13}$ is 31 or more, since the deinking performance is deteriorated and the compound is liable to solidify in this case. When the carbon atom number of $R_{13}$ is 4 or less, the hydrophobic group becomes small, which sometimes deteriorates the deinking performance.

In order to produce the compounds of the general formula (I), (II), (III), (IV) or (V), the alkylsuccinic acid or alkenylsuccinic acid may be a mixture of the same differing in carbon atom number from each other in the alkyl or alkenyl group. Further, either a straight-chain compound or a branched one may be used.

In the reclamation of waste paper, the deinking agent of the present invention may be added either at the pulping stage or the soaking stage. The amount of the deinking agent may vary depending on the quality of the waste paper and the type of ink (for example, letterpress ink and offset ink). It is generally appropriate to add 0.1 to 0.8 % by weight, still preferably 0.2 to 0.6 % by weight, based on the dry starting waste paper weight, of the deinking agent.

In general formulae (I), (II), (III), (IV) and (V), it is particularly preferable in order to achieve the objects of the present invention that $R_1$, $R_4$, $R_7$, $R_{10}$ and $R_{13}$ each represents an alkyl or alkenyl group having 12 to 20 carbon atoms, that $R_5$, $R_6$, $R_8$ and $R_{11}$ each represents an alkyl or alkenyl group having 11 to 17 carbon atoms; and that $R_{12}$ and $R_{15}$ each represents an alkyl group having 1 to 3 carbon atoms.

In the present invention, two or more compounds selected from among those represented by general formulae (I), (II), (III), (IV) and (V) may be arbitrarily combined together in any desired ratio.

In addition, the deinking agent of the present invention may further comprise a third component. For instance, the deinking agent according to the present invention may be used together with a conventionally used deinking agent (for example, fatty acids, fatty acid derivatives, nonionic surfactants, cationic surfactants, anionic surfactants) in any desired ratio. In particular, when the deinking agent of the present invention is used with fatty acids, it is also possible to use, following the addition of the deinking agent of the present invention, a polyvalent metal salt (for example, calcium chloride, magnesium chloride, magnesium hydroxide, calcium hydroxide, ammonium sulfate). By this, it is possible to make a fatty acid an isoluble salt and to remove the isnoluble salt from the system.

To further illustrate the present invention, and not by way of limitation, the following Examples will be given.

EXAMPLES 1 TO 33

By using each of the compounds of the present invention listed in Table 1 as a deinking agent, a deinking test was performed in accordance with "Method for Determining the Deinkability of Wastepaper" specified by Japan Technical Association of the Pulp and Paper Industry (J. TAPPI: No. 39-82).

Waste papers comprising 70% by weight of newspaper (Mainichi, Asahi and Yomiuri) printed 1 to 3 months ago and 30% by weight of leaflets were cut into pieces (about 5 mm × 10 mm) and a given amount thereof was fed into a bench disintegrator. Then, warm water of 70 °C, 1.4% by weight (based on the dry starting waste paper) of sodium hydroxide, 2.8 % by weight (based on the dry starting waste paper) of sodium silicate No. 3, 1.0% by weight (based on the dry starting waste paper) of hydrogen peroxide (on a pure basis) and 0.2% by weight (based on the dry starting waste paper) of each of the deinking agents listed in Table 1 was added thereto. After disintegrating at a pulp concentration of 5% by weight at 60 °C for 10 minutes, the mixture was soaked at 50 °C for 1 hour.

After diluting with water to give a pulp concentration of 1% by weight, the mixture was subjected to flotation at 30 °C for 10 minutes in a test flotator. Amount of air is 10 liter per minute. After the completion of the flotation, the pulp slurry was concentrated to thereby give a pulp concentration of 10% by weight and then diluted with water to give a pulp concentration of 1% by weight. Next, it was treated with a TAPPI standard machine to thereby give a pulp sheet. The whiteness of the pulp sheet thus obtained was measured with a color difference meter (Z-1001DP; product of Nippon Denshoku K.K.) in accordance with JIS Z8722 and the unliberated ink spots contained therein and the unliberated ink area were determined with an image analyzer (Dot Analyzer DA-3000 (object glass: 5 × magnification); product of KS System K.K.).

Table 1 summarizes the results.

COMPARATIVE EXAMPLES 1 TO 4

Four commonly marketed deinking agents

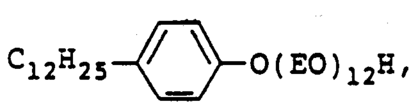,

$C_{13}H_{27}COOH$, $C_{12}H_{25}(EO)_{10}H$ and $HOOC(CH_2)_4COOH$ were subjected to the same test as described above to thereby evaluate the deinking performances thereof.

Table 2 summarizes the results.

In Tables 1 and 2, EO represents an ethylene oxide unit, PO represents a propylene oxide unit and XO and YO each represents an alkylene oxide unit.

TABLE 1: EXAMPLES

| No. | Deinking agent | XO: Average mol number of added EO | XO: Average mol number of added PO | YO: Average mol number of added EO | YO: Average mol number of added PO | Whiteness (%) | Number of unliberated ink spots (per $cm^2$) | Area of unliberated ink spots ($mm^2/cm^2$) |
|---|---|---|---|---|---|---|---|---|
| 1 | $C_6H_{11}CH(CH_2COO(XO)C_{12}H_{25})COO(YO)C_{12}H_{25}$ | 35 | 15 | 35 | 15 | 54.2 | 8550 | 1.25 |
| 2 | $C_{12}H_{23}CH(CH_2COO(XO)C_{12}H_{25})COO(YO)C_{12}H_{25}$ | 35 | 15 | 35 | 15 | 55.2 | 7050 | 1.02 |
| 3 | $C_{14}H_{27}CH(CH_2COO(XO)C_{12}H_{25})COO(YO)C_{12}H_{25}$ | 35 | 15 | 35 | 15 | 54.8 | 8000 | 1.13 |
| 4 | $C_{16}H_{31}CH(CH_2COO(XO)C_{12}H_{25})COO(YO)C_{12}H_{25}$ | 35 | 15 | 35 | 15 | 55.8 | 6500 | 0.95 |
| 5 | $C_{18}H_{35}CH(CH_2COO(XO)C_{12}H_{25})COO(YO)C_{12}H_{25}$ | 35 | 15 | 35 | 15 | 55.6 | 6680 | 0.97 |
| 6 | $C_{20}H_{39}CH(CH_2COO(XO)C_{12}H_{25})COO(YO)C_{12}H_{25}$ | 35 | 15 | 35 | 15 | 55.7 | 6600 | 0.97 |
| 7 | $C_{16}H_{31}CH(CH_2COO(XO)C_{12}H_{25})COO(YO)C_{17}H_{33}$ | 35 | 15 | 35 | 15 | 55.9 | 6400 | 0.93 |
| 8 | $C_{16}H_{31}CH(CH_2COO(XO)OOC_7H_{15})COO(YO)OCC_7H_{15}$ | 35 | 15 | 35 | 15 | 55.0 | 7850 | 1.14 |
| 9 | $C_{16}H_{31}CH(CH_2COO(XO)OCC_{13}H_{27})COO(YO)OCC_{13}H_{27}$ | 35 | 15 | 35 | 15 | 55.8 | 6480 | 0.95 |
| 10 | $C_{16}H_{31}CH(CH_2COO(XO)OCC_{17}H_{35})COO(YO)OCC_{17}H_{35}$ | 35 | 15 | 35 | 15 | 56.4 | 5850 | 0.85 |
| 11 | $C_{16}H_{31}CH(CH_2COO(XO)OCC_{17}H_{35})COO(YO)OCC_{17}H_{35}$ | 20 | 10 | 20 | 10 | 56.0 | 6300 | 0.92 |
| 12 | $C_{16}H_{31}CH(CH_2COO(XO)OCC_{17}H_{35})COO(YO)OCC_{17}H_{35}$ | 70 | 30 | 70 | 30 | 55.0 | 7800 | 1.14 |
| 13 | $C_{16}H_{31}CH(CH_2COO(XO)OCC_{17}H_{35})COO(YO)OCC_{17}H_{35}$ | 100 | 40 | 100 | 40 | 54.3 | 8480 | 1.24 |
| 14 | $C_{16}H_{31}CH(CH_2COO(XO)OCC_{17}H_{35})COO(YO)OCC_{17}H_{33}$ | 35 | 15 | 35 | 15 | 56.8 | 5780 | 0.83 |

TABLE 1 (continued)

| No. | Deinking agent | XO Average mol number of added EO | XO Average mol number of added PO | YO Average mol number of added EO | YO Average mol number of added PO | Whiteness (%) | Number of unliberated ink spots (per $cm^2$) | Area of unliberated ink spots ($mm^2/cm^2$) |
|---|---|---|---|---|---|---|---|---|
| 15 | $C_{16}H_{31}CH(CH_2COO(XO)OCC_{17}H_{35})COO(YO)C_{12}H_{25}$ | 35 | 15 | 35 | 15 | 56.2 | 5950 | 0.87 |
| 16 | $C_{16}H_{31}CH(CH_2COO(XO)OCC_{17}H_{35})COO(YO)C_{17}H_{33}$ | 35 | 15 | 35 | 15 | 56.5 | 5820 | 0.85 |
| 17 | $C_{16}H_{31}CH(CH_2COO(XO)OCC_{13}H_{27})COO(YO)C_{17}H_{33}$ | 35 | 15 | 35 | 15 | 55.9 | 6350 | 0.94 |
| 18 | $C_{16}H_{31}CH(CH_2COO(XO)OCC_{17}H_{35})COOCH_3$ | 35 | 15 | - | - | 56.0 | 6200 | 0.92 |
| 19 | $C_{16}H_{31}CH(CH_2COO(XO)OCC_{17}H_{35})COOC_3H_7$ | 35 | 15 | - | - | 56.2 | 6050 | 0.90 |
| 20 | $C_{16}H_{31}CH(CH_2COO(XO)OCC_{17}H_{35})COOC_3H_7$ | 35 | 15 | - | - | 56.1 | 6100 | 0.91 |
| 21 | $C_{16}H_{31}CH(CH_2COO(XO)OCC_{12}H_{25})COOC_3H_7$ | 35 | 15 | - | - | 55.6 | 6560 | 0.96 |
| 22 | $C_{16}H_{31}CH(CH_2COO(XO)C_{12}H_{25})COOC_3H_7$ | 35 | 15 | - | - | 55.5 | 6500 | 0.96 |
| 23 | $C_{16}H_{31}CH(CH_2COO(XO)C_{17}H_{35})COOC_3H_7$ | 35 | 15 | - | - | 56.2 | 6010 | 0.91 |
| 24 | $C_{16}H_{31}CH(CH_2COO(XO)C_{17}H_{33})COOC_3H_7$ | 35 | 15 | - | - | 55.9 | 6300 | 0.93 |
| 25 | $C_{16}H_{31}CH(CH_2COO(XO)C_{17}H_{33})COOCH_7$ | 35 | 15 | - | - | 55.9 | 6280 | 0.92 |

TABLE 1 (continued)

| No. | Deinking agent | XO | | YO | | White-ness (%) | Number of un-liberated ink spots (per $cm^2$) | Area of un-liberated ink spots ($mm^2/cm^2$) |
|---|---|---|---|---|---|---|---|---|
| | | Average mol number of added EO | Average mol number of added PO | Average mol number of added EO | Average mol number of added PO | | | |
| 26 | No. 10+ No.4 (1:1) | - | - | - | - | 56.2 | 6000 | 0.91 |
| 27 | No. 10+ No.16 (1:1) | - | - | - | - | 56.6 | 5750 | 0.83 |
| 28 | " (1:3) | - | - | - | - | 56.3 | 5810 | 0.85 |
| 29 | " (3:1) | - | - | - | - | 56.5 | 5800 | 0.85 |
| 30 | No. 10+ No.18 (1:1) | - | - | - | - | 56.0 | 6100 | 0.90 |
| 31 | No. 10+ No.23 (") | - | - | - | - | 56.4 | 5810 | 0.85 |
| 32 | No. 16+ No.18 (") | - | - | - | - | 56.2 | 5980 | 0.90 |
| 33 | No. 18+ No.23 (") | - | - | - | - | 56.0 | 5990 | 0.90 |

TABLE 2: COMPARATIVE EXAMPLES

| No. | Deinking agent | Whiteness (%) | Number of unliberated ink spots (per $cm^2$) | Area of unliberated ink spots ($mm^2/cm^2$) |
|---|---|---|---|---|
| 1 | 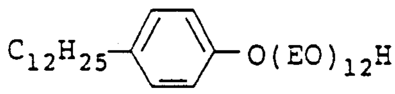 | 49.0 | 43200 | 5.90 |
| 2 | $C_{13}H_{27}COOH$ | 50.0 | 38000 | 5.19 |
| 3 | $C_{12}H_{25}O(EO)_{10}H$ | 50.2 | 39000 | 5.32 |
| 4 | $HOOC(CH_2)_4COOH$ | 48.3 | 46500 | 6.35 |

The deinking agent of the present invention, which is obtained by, for example, esterifying an alkylene oxide (for example, ethylene oxide) adduct of a dibasic acid with a fatty acid or etherifying the same with a lower alcohol, is excellent in its ability to collect, aggregate and liberate ink. Thus, paper reclaimed with the deinking agent of the present invention has high whiteness and is contaminated with less unliberated ink spots as compared with paper reclaimed with conventional ones.

While the invention has been described in detail and with reference to specific embodiments thereof, it will be apparent to one skilled in the art that various changes and modifications can be made therein without departing from the spirit and scope thereof.

**Claims**

**1.** A deinking agent for the reclamation of waste paper comprising a compound represented by the following general formula (I):

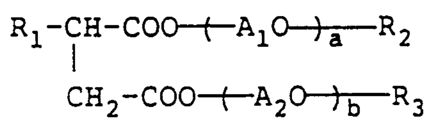

wherein $R_1$ represents an alkyl or alkenyl group having 5 to 30 carbon atoms;

$R_2$ and $R_3$ may be either the same or different and each represents an alkyl or alkenyl group having 1 to 30 carbon atoms, an alkylphenyl group having an alkyl group having 3 to 20 carbon atoms or an aralkyphenyl group having 1 to 5 aralkyl groups;

$A_1O$ and $A_2O$ each represents a polyoxyalkylene group formed by polymerizing oxyalkylene groups having 2 to 4 carbon atoms which may be either a block polymer chain or a random polymer chain when two or more kinds of the alkylene oxide are present; and

a and b may be either the same or different and each represents a number of 1 or above so as to give a number average molecular weight to the corresponding polyoxyalkylene group of 10,000 or less.

**2.** A deinking agent for the reclamation of waste paper comprising a compound represented by the following general formula (II):

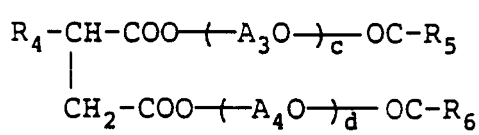

wherein $R_4$ represents an alkyl or alkenyl group having 5 to 30 carbon atoms;

$R_5$ and $R_6$ may be either the same or different and each represents an alkyl or alkenyl group having 5 to 21 carbon atoms;

$A_3O$ and $A_4O$ each represents a polyoxyalkylene group formed by polymerizing oxyalkylene groups having 2 to 4 carbon atoms which may be either a block polymer chain or a random polymer chain when two or more kinds of the alkylene oxide are present; and

c and d may be either the same or different and each represents a number of 1 or above so as to give a number average molecular weight to the corresponding polyoxyalkylene group of 10,000 or less.

**3.** A deinking agent for the reclamation of waste paper comprising a compound represented by the following general formula (III):

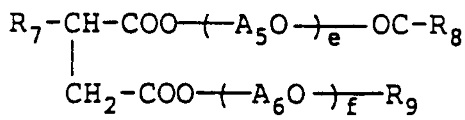

; or

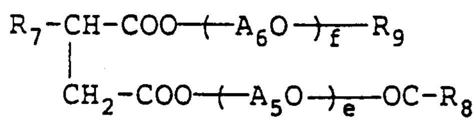

wherein $R_7$ represents an alkyl or alkenyl group having 5 to 30 carbon atoms;

$R_8$ represents an alkyl or alkenyl group having 5 to 21 carbon atoms;

$R_9$ represents a hydrogen atom or an alkyl or alkenyl group having 1 to 30 carbon atoms, an alkylphenyl group having an alkyl group having 3 to 20 carbon atoms or an aralkylphenyl group having 1 to 5 aralkyl groups;

$A_5O$ and $A_5O$ each represents a polyoxyalkylene group formed by polymerizing oxyalkylene groups having 2 to 4 carbon atoms which may be either a block polymer chain or a random polymer chain when two or more kinds of the alkylene oxide are present; and

e and f may be either the same or different and each represents a number of 1 or above so as to give a number average molecular weight to the corresponding polyoxy alkylene group of 10,000 or less.

**4.** A deinking agent for the reclamation of waste paper comprising a compound represented by the following general formula (IV):

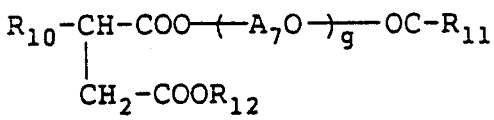

; or

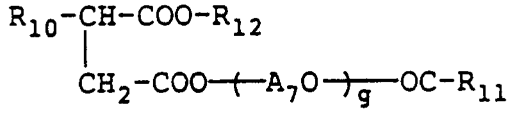

wherein $R_{10}$ represents an alkyl or alkenyl group having 5 to 30 carbon atoms;

$R_{11}$ represents an alkyl or alkenyl group having 5 to 21 carbon atoms;

$R_{12}$ represents a hydrogen atom, an alkyl group having 1 to 8 carbon atoms or an alkenyl group having 2 to 8 carbon atoms;

$A_7O$ represents a polyoxyalkylene group formed by polymerizing oxyalkylene groups having 2 to 4 carbon atoms which may be either a block polymer chain or a random polymer chain when two or more kinds of the alkylene oxide are present; and

g is a number of 1 or above so as to give a number average molecular weight to the

polyoxyalkylene group of 10,000 or less.

5. A deinking agent for the reclamation of waste paper comprising a compound represented by the following general formula (V):

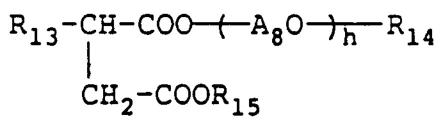

; or

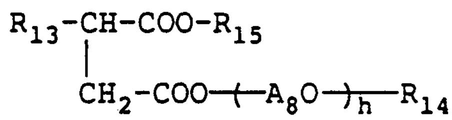

wherein $R_{13}$ represents an alkyl or alkenyl group having 5 to 30 carbon atoms;

$R_{14}$ represents an alkyl or alkenyl group having 1 to 30 carbon atoms, an alkylphenyl group having an alkyl group having 3 to 20 carbon atoms or an aralkylphenyl group having 1 to 5 aralkyl groups;

$R_{15}$ represents a hydrogen atom, an alkyl group having 1 to 8 carbon atoms or an alkenyl group having 2 to 8 carbon atoms;

$A_8O$ represents a polyoxyalkylene group formed by polymerizing oxyalkylene groups having 2 to 4 carbon atoms which may be either a block polymer chain or a random polymer chain when two or more kinds of the alkylene oxide are present; and

h is a number of 1 or above so as to give a number average molecular weight to the polyoxyalkylene group of 10,000 or less.

6. A deinking agent for the reclamation of waste paper as in any of Claims 1 to 5, in mixture with another deinking agent.

7. A deinking method for the reclamation of waste paper, using an agent as in any of Claims 1 to 6, and a polyvalent metal salt, added after said deinking agent.

8. A deinking method for the reclamation of waste paper using an agent as in any of Claims 1 to 7 in an amount of from 0.1 to 0.8 % by weight based on the dry starting waste paper.

**Patentansprüche**

1. Entfärbungsmittel zum Wiedergewinnen von Abfallpapier, umfasend eine Verbindung, dargestellt durch die folgende allgemeine Formel (I):

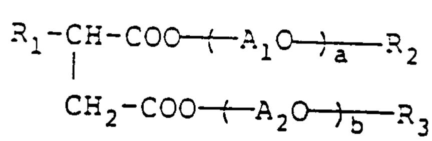

worin $R_1$ eine Alkyl- oder Alkenylgruppe mit 5 bis 30 Kohlenstoffatomen ist;

worin $R_2$ und $R_3$ entweder gleich oder verschieden sein können und jeweils eine Alkyl- oder Alkenylgruppe mit 1 bis 30 Kohlenstoffatomen, eine Alkylphenylgruppe mit einer Alkylgruppe mit 3 bis 20 Kohlenstoffatomen oder eine Aralkylphenylgruppe mit 1 bis 5 Aralkylgruppen bedeutet;

worin $A_1O$ und $A_2O$ jeweils eine Polyoxyalkylengruppe bedeuten, gebildet durch Polymerisation von Oxyalkylengruppen mit 2 bis 4 Kohlenstoffatomen, die entweder eine Blockpolymerkette oder eine Polymerkette mit statistischer Verteilung sein können, wenn zwei oder mehr Arten des Alkylenoxids vorhanden sind; und

worin a und b entweder gleich oder verschieden sein können, und jeweils eine Zahl von 1 oder mehr

bedeuten, so daß sich ein Molekulargewicht im Zahlenmittel für die entsprechende Polyoxalkylengruppe von 10.000 oder weniger ergibt.

**2.** Entfärbungsmittel für die Wiedergewinnung von Abfallpapier, umfassend eine Verbindung, dargestellt durch die folgende allgemeine Formel (II):

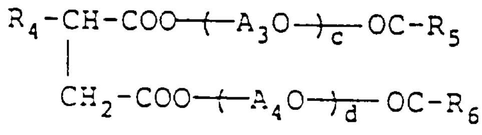

worin $R_4$ eine Alkyl- oder Alkenylgruppe mit 5 bis 30 Kohlenstoffatomen bedeutet;
worin $R_5$ und $R_6$ gleich oder verschieden sein können und jeweils eine Alkyl- oder Alkenylgruppe mit 5 bis 21 Kohlenstoffatomen bedeuten;
worin $A_3O$ und $A_4O$ jeweils eine Polyoxyalkylengruppe bedeuten, gebildet durch Polymerisaton von Oxyalkylengruppen mit 2 bis 4 Kohlenstoffatomen, die entweder eine Blockpolymerkette oder eine Polymerkette mit statistischer Verteilung sein können, wenn zwei oder mehr Arten des Alkylenoxids vorhanden sind; und
worin c und d entweder gleich oder verschieden sein können und jeweils eine Zahl von 1 oder mehr bedeuten, so daß sich ein Molekulargewicht im Zahlenmittel für die entsprechende Polyoxyalkylengruppe von 10.000 oder weniger ergibt.

**3.** Entfärbungsmittel für die Wiedergewinnung von Abfallpapier, umfassend eine Verbindung, dargestellt durch die folgende allgemeine Formel (III):

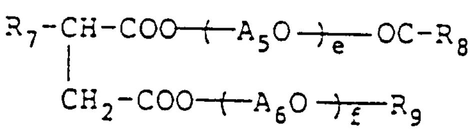 ; oder

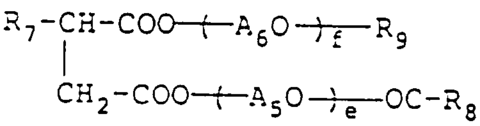

worin $R_7$ eine Alkyl- oder Alkenylgruppe mit 5 bis 30 Kohlenstoffatomen bedeutet;
worin $R_8$ eine Alkyl- oder Alkenylgruppe mit 5 bis 21 Kohlenstoffatomen bedeutet;
worin $R_9$ ein Wasserstoffatom oder eine Alkyl- oder Alkenylgruppe mit 1 bis 30 Kohlenstoffatomen, eine Alkylphenylgruppe mit einer Alkylgruppe mit 3 bis 20 Kohlenstoffatomen oder eine Aralkylphenylgruppe mit 1 bis 5 Aralkylgruppen bedeutet;
worin $A_5O$ und $A_5O$ jeweils eine Polyoxalkylengruppe bedeuten, gebildet durch Polymerisation von Oxyalkylengruppen mit 2 bis 4 Kohlenstoffatomen, die entweder eine Blockpolymerkette oder eine Polymerkette mit statistischer Verteilung sein können, wenn 2 oder mehr Arten des Alkylenoxids vorhanden sind; und
worin e und f entweder gleich oder verschieden sein können und jeweils eine Zahl von 1 oder mehr bedeuten, so daß sich ein Molekulargewicht im Zahlenmittel für die entsprechende Polyoxyalkylengruppe von 10.000 oder weniger ergibt.

**4.** Entfärbungsmittel für die Wiedergewinnung von Abfallpapier, umfassend eine Verbindung, dargestellt durch die folgende allgemeine Formel (IV):

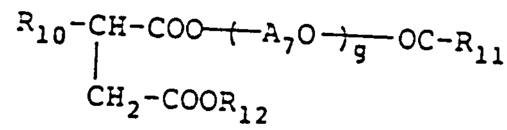

; oder

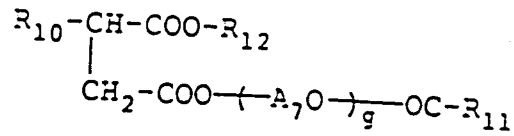

worin $R_{10}$ eine Alkyl- oder Alkenylgruppe mit 5 bis 30 Kohlenstoffatomen ist;
worin $R_{11}$ eine Alkyl- oder Alkenylgruppe mit 5 bis 21 Kohlenstoffatomen ist;
worin $R_{12}$ ein Wasserstoffatom, eine Alkylgruppe mit 1 bis 8 Kohlenstoffatomen oder eine Alkenylgruppe mit 2 bis 8 Kohlenstoffatomen ist;
worin $A_7O$ eine Polyoxyalkylengruppe ist, gebildet durch Polymerisation von Oxyalkylengruppen mit 2 bis 4 Kohlenstoffatomen, die entweder eine Blockpolymerkette oder eine Polymerkette mit statistischer Verteilung ergeben können, wenn zwei oder mehr Arten des Alkylenoxids vorhanden sind; und
worin g eine Zahl von 1 oder mehr ist, so daß sich ein Molekulargewicht im Zahlenmittel für die Polyoxyalkylengruppe von 10.000 oder weniger ergibt.

**5.** Entfärbungsmittel für die Wiedergewinnung von Abfallpapier, umfassend eine Verbindung, dargestellt durch die folgende allgemeine Formel (V):

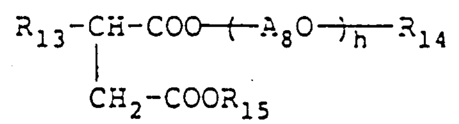

; oder

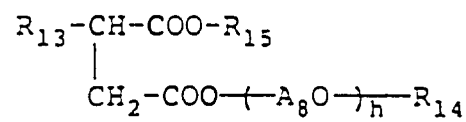

worin $R_{13}$ eine Alkyl- oder Alkenylgruppe mit 5 bis 30 Kohlenstoffatomen bedeutet;
worin $R_{14}$ eine Alkyl- oder Alkenylgruppe mit 1 bis 30 Kohlenstoffatomen, eine Alkylphenylgruppe mit einer Alkylgruppe mit 3 bis 20 Kohlenstoffatomen oder eine Aralkylphenylgruppe mit 1 bis 5 Aralkylgruppen bedeutet;
worin $R_{15}$ ein Wasserstoffatom, eine Alkylgruppe mit 1 bis 8 Kohlenstoffatomen oder eine Alkenylgruppe mit 2 bis 8 Kohlenstoffatomen bedeutet;
worin $A_8O$ eine Polyoxyalkylengruppe bedeutet, gebildet durch Polymerisation von Oxyalkylengruppen mit 2 bis 4 Kohlenstoffatomen, die entweder eine Blockpolymerkette oder eine Polymerkette mit statistischer Verteilung sein können, wenn zwei oder mehr Arten des Alkylenoxides vorhanden sind; und
worin h eine Zahl von 1 oder mehr ist, so daß sich ein Molekulargewicht im Zahlenmittel für die Polyoxyalkylengruppe von 10.000 oder weniger ergibt.

**6.** Entfärbungsmittel für die Wiedergewinnung von Abfallpapier nach einem der Ansprüche 1 bis 5, in Zumischung mit einem anderen Entfärbungsmittel.

**7.** Entfärbungsverfahren zur Wiedergewinnung von Abfallpapier unter Verwendung eines Mittels nach einem der Ansprüche 1 bis 6 und eines polyvalenten Metallsalzes, das nach dem Entfärbungsmittel zugegeben wird.

**8.** Entfärbungsverfahren für die Wiedergewinnung von Abfallpapier unter Verwendung eines Mittels nach einem der Ansprüche 1 bis 7 in einer Menge von 0,1 bis 0,8 Gew.%, bezogen auf das trockene Abfallpapier als Ausgangsmaterial.

## Revendications

**1.** Agent de désencrage pour la récupération de vieux papiers comprenant un composé représenté par la formule générale (I) suivante :

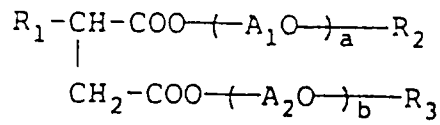

dans laquelle $R_1$ représente un groupe alkyle ou alcényle ayant 5 à 30 atomes de carbone;

$R_2$ et $R_3$ peuvent être identiques ou différents et représentent chacun un groupe alkyle ou alcényle ayant 1 à 30 atomes de carbone, un groupe alkylphényle ayant un groupe alkyle ayant 3 à 20 atomes de carbone ou un groupe arylalkylphényle ayant 1 à 5 groupes arylalkyle ;

$A_1O$ et $A_2O$ représentent chacun un groupe polyoxyalkylène formé par la polymérisation de groupes oxyalkylène ayant 2 à 4 atomes de carbone qui peut être une chaîne polymère alternée ou une chaîne polymère statistique quand deux ou plusieurs types d'oxyde d'alkylène sont présents ; et

a et b peuvent être identiques ou différents et représentent chacun le nombre 1 ou un nombre supérieur de telle façon que la masse moléculaire moyenne en nombre du groupe polyoxyalkylène correspondant soit de 10 000 ou moins.

**2.** Agent de désencrage pour la récupération de vieux papiers comprenant un composé représenté par la formule générale (II) suivante :

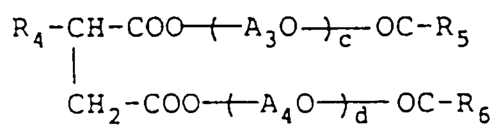

dans laquelle $R_4$ représente un groupe alkyle ou alcényle ayant 5 à 30 atomes de carbone ;

$R_5$ et $R_6$ peuvent être identiques ou différents et représentent chacun un groupe alkyle ou alcényle ayant 5 à 21 atomes de carbone ;

$A_3O$ et $A_4O$ représentent chacun un groupe polyoxyalkylène formé par la polymérisation de groupes oxyalkylène ayant 2 à 4 atomes de carbone qui peut être une chaîne polymère alternée ou une chaîne polymère statistique quand deux ou plusieurs types d'oxyde d'alkylène sont présents ; et

c et d peuvent être identiques ou différents et représentent chacun le nombre 1 ou un nombre supérieur de telle façon que la masse moléculaire moyenne en nombre du groupe polyoxyalkylène correspondant soit de 10 000 ou moins.

**3.** Agent de désencrage pour la récupération de vieux papiers comprenant un composé représenté par la formule générale (III) suivante :

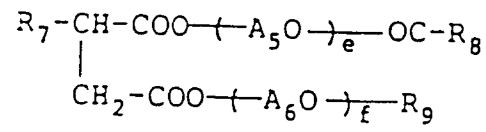

ou

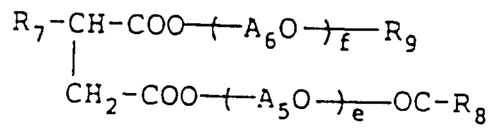

dans laquelle $R_7$ représente un groupe alkyle ou alcényle ayant 5 à 30 atomes de carbone ;

$R_8$ représente un groupe alkyle ou alcényle ayant 5 à 21 atomes de carbone ;

$R_9$ représente l'atome d'hydrogène ou un groupe alkyle ou alcényle ayant 1 à 30 atomes de carbone, un groupe alkylphényle ayant un groupe alkyle ayant 3 à 20 atomes de carbone ou un groupe arylalkylphényle ayant 1 à 5 groupes arylalkyle ;

$A_5O$ et $A_5O$ représentent chacun un groupe polyoxyalkylène formé par la polymérisation de groupes oxyalkylène ayant 2 à 4 atomes de carbone qui peut être une chaîne polymère alternée ou une chaîne polymère statistique quand deux ou plusieurs types d'oxyde d'alkylène sont présents ; et

e et f peuvent être identiques ou différents et représentent chacun le nombre 1 ou un nombre supérieur de telle façon que la masse moléculaire moyenne en nombre du groupe polyoxyalkylène correspondant soit de 10 000 ou moins.

**4.** Agent de désencrage pour la récupération de vieux papiers comprenant un composé représenté par la formule générale (IV) suivante :

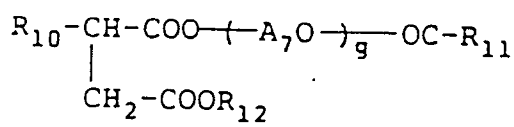

ou

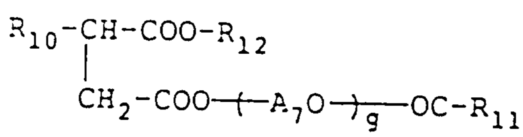

dans laquelle $R_{10}$ représente un groupe alkyle ou alcényle ayant 5 à 30 atomes de carbone ;

$R_{11}$ représente un groupe alkyle ou alcényle ayant 5 à 21 atomes de carbone ;

$R_{12}$ représente l'atome d'hydrogène, un groupe alkyle ayant 1 à 8 atomes de carbone ou un groupe alcényle ayant 2 à 8 atomes de carbone ;

$A_7O$ représente un groupe polyoxyalkylène formé par la polymérisation de groupes oxyalkylène ayant 2 à 4 atomes de carbone qui peut être une chaîne polymère alternée ou une chaîne polymère statistique quand deux ou plusieurs types d'oxyde d'alkylène sont présents ; et

g représente le nombre 1 ou un nombre supérieur de telle façon que la masse moléculaire moyenne en nombre du groupe polyoxyalkylène correspondant soit de 10 000 ou moins.

**5.** Agent de désencrage pour la récupération de vieux papiers comprenant un composé représenté par la formule générale (V) suivante :

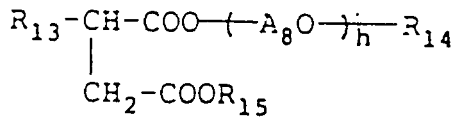

ou

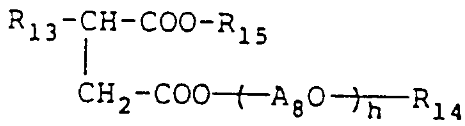

dans laquelle $R_{13}$ représente un groupe alkyle ou alcényle ayant 5 à 30 atomes de carbone ;

$R_{14}$ représente un groupe alkyle ou alcényle ayant 1 à 30 atomes de carbone, un groupe alkylphényle ayant un groupe alkyle ayant 3 à 20 atomes de carbone ou un groupe arylalkylphényle ayant 1 à 5 groupes arylalkyle ;

$R_{15}$ représente l'atome d'hydrogène, un groupe alkyle ayant 1 à 8 atomes de carbone ou un groupe alcényle ayant 2 à 8 atomes de carbone ;

$A_8O$ représente un groupe polyoxyalkylène formé par la polymérisation de groupes oxyalkylène ayant 2 à 4 atomes de carbone qui peut être une chaîne polymère alternée ou une chaîne polymère statistique quand deux ou plusieurs types d'oxyde d'alkylène sont présents ; et

h représente le nombre 1 ou un nombre supérieur de telle façon que la masse moléculaire moyenne en nombre du groupe polyoxyalkylène correspondant soit de 10 000 ou moins.

**6.** Agent de désencrage pour la récupération de vieux papiers tel que défini dans une quelconque des revendications 1 à 5, en mélange avec un autre agent de désencrage.

**7.** Méthode de désencrage pour la récupération de vieux papiers utilisant un agent tel que défini dans une quelconque des revendications 1 à 6, et un sel de métal polyvalent, ajouté audit agent de désencrage.

**8.** Méthode de désencrage pour la récupération de vieux papiers utilisant un agent tel que défini dans une quelconque des revendications 1 à 7, en une quantité allant de 0,1 % à 0,8 % en masse par rapport au vieux papier sec de départ.